# EUROPÄISCHE PATENTSCHRIFT

(11) **EP 0 700 731 B1**
(45) Veröffentlichungstag und Bekanntmachung des Hinweises auf die Patenterteilung: **04.11.1998**
(21) Anmeldenummer: 95113661.3
(22) Anmeldetag: 31.08.1995
(51) Int. Cl.: B05D 7/24, B65D 65/40, C08L 67/00

(54) **Verpackungsmittel mit Barriereeigenschaften gegen Sauerstoff**
Oxygen barrier forming package material
Matériel d'emballage faisant une barrière pour l'oxygène

(30) Priorität: 09.09.1994 DE 4432080
(43) Veröffentlichungstag der Anmeldung: 13.03.1996
(73) Patentinhaber: BASF Aktiengesellschaft, 67063 Ludwigshafen (DE)
(72) Erfinder: Penzel, Erich, Dr., D-69118 Heidelberg (DE); Seyffer, Hermann, Dr., D-69123 Heidelberg (DE); Beckmann, Eberhard, Dr., D-67435 Neustadt (DE); Sendhoff, Norbert, Dr., D-67269 Grünstadt (DE)

(56) Entgegenhaltungen:
- EP-A- 0 003 337
- EP-A- 0 101 864
- EP-A- 0 260 203
- EP-A- 0 356 341
- US-A- 4 251 641
- US-A- 4 579 890

## Beschreibung

Die Erfindung betrifft ein Verfahren zur Herstellung von Verpackungsmitteln. Lebensmittel, Arzneimittel, Kosmetika und andere empfindliche und leicht verderbliche Ware müssen so verpackt werden, daß sie gegen Gase und Feuchtigkeit geschützt sind. Bisher werden zu diesem Zweck Verpackungsmittel mit Beschichtungen auf Basis chlorhaltiger Copolymerisate verwendet. Chlorhaltige Produkte sind jedoch in zunehmendem Maße unerwünscht.

Wäßrige Dispersionen, welche Polyacrylate und Polyester enthalten, sind z.B. aus der WO-92/12195 und der US-A-4 996 252 bekannt. Die Dispersionen werden als bzw. in Druckfarben verwendet.

Aufgabe der vorliegenden Erfindung waren Verpackungsmittel mit guten Barriereeigenschaften gegen Sauerstoff. Die Verpackungsmittel sollten ihre Barriereeigenschaften auch unter Feuchtigkeitseinwirkung nicht verlieren.

Des weiteren sollten die Verpackungsmittel gegebenenfalls Deckbeschichtungen aufweisen, welche z.B. einen hohen Glanz, eine gute Bedruckbarkeit und Siegelbarkeit bewirken.

Demgemäß wurde ein Verfahren zur Herstellung von Verpackungsmitteln gefunden, das dadurch gekennzeichnet ist, daß zur Verpackung geeignete Substrate mit einer wäßrigen Lösung oder Dispersion, welche ein Copolymerisat A), aufgebaut aus
- a) 10 bis 100 Gew.-%: einer ethylenisch ungesättigten C₃-C₅-Carbonsäure oder -Dicarbonsäure, Anhydriden oder Halbestern der Dicarbonsäuren
- b) 0 bis 50 Gew.-%: einer ethylenisch ungesättigten Verbindung mit mindestens einer Sulfonsäure- oder Sulfonatgruppe
- c) 0 bis 70 Gew.-%: weiteren Monomeren,
und einen Polyester B) enthält, beschichtet werden und gegebenenfalls danach noch weitere Deckbeschichtungen aufgebracht werden.

Gefunden wurden auch Verpackungsmittel, welche durch ein solches Verfahren erhältlich sind.

Bei den erfindungsgemäßen Verfahren wird eine wäßrige Lösung oder vorzugsweise Dispersion, welche ein radikalisch polymerisiertes Copolymerisat A) und einen Polyester B) enthält, auf geeignete Substrate aufgetragen.

Vorzugsweise ist Copolymerisat A) aus 10 bis 80 Gew.-%, besonders bevorzugt 10 bis 50 Gew.-% Monomeren a), 10 bis 50 Gew.-%, besonders bevorzugt 10 bis 40 Gew.-% Monomeren b) und 10 bis 70 Gew.-%, besonders bevorzugt 30 bis 60 Gew.-% Monomeren c) aufgebaut.

Bei Monomeren a) handelt es sich z.B. um Acrylsäure, Methacrylsäure, Itaconsäure, Maleinsäure, Fumarsäure, oder den Halbestern der Dicarbonsäuren oder deren Mischungen. Besonders bevorzugt sind Carbonsäuren oder Dicarbonsäuren, insbesondere Acrylsäure oder Methacrylsäure.

Die Carbonsäuregruppen können gegebenenfalls auch in neutralisierter Form vorliegen, d.h. als Salz.

Ethylenisch ungesättigte Verbindungen (b) sind z.B. 2-Sulfoethyl-methacrylat, 2-Acrylamido-2-methylpropansulfonsäure, (3-Sulfopropyl)-acrylsäureester, (3-Sulfopropyl)-methacrylsäureester, Bis-(3-Sulfopropyl)-itaconsäureester und deren Mischungen. Besonders bevorzugt sind 2-Sulfoethyl-methacrylat und 2-Acrylamido-2-methylpropansulfonsäure.

Bei den weiteren Monomeren c) kann es sich z.B. um Hydroxyalkyl(meth)acrylate, Amide von ethylenisch ungesättigten Carbonsäuren, insbesondere der oben genannten C₃-C₅-Carbonsäuren oder Dicarbonsäuren oder C₁-C₂₀-Alkyl(meth)acrylate, Vinylester von bis zu 20 C-Atomen enthaltenden Carbonsäuren, Vinylaromaten mit bis zu 20 C-Atomen, ethylenisch ungesättigte Nitrile und aliphatischen Kohlenwasserstoffen mit 2 bis 8 C-Atomen und 1 oder 2 Doppelbindungen oder deren Gemische handeln.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Als nicht aromatische Kohlenwasserstoffe mit 2 bis 8 C-Atomen und ein oder zwei olefinischen Doppelbindungen seien Butadien, Isopren und Chloropren, sowie Ethylen, Propylen und Isobutylen genannt.

Die weiteren Monomeren werden auch vorzugsweise im Gemisch eingesetzt.

Als weitere Monomere c) sind insbesondere solche bevorzugt, die eine Glasüberganstemperatur über 20°C haben (bestimmt gemäß ASTM 3418/82 durch Differentialthermoanalyse oder Differential Scanning Colorimetrie)

Besonders bevorzugt sind (Meth)acrylnitril, die oben genannten Amide oder Hydroxyalkyl(meth)acrylate, z.B. C₁-C₁₀-Hydroxyalkyl(meth)acrylate als weitere Monomere c).

Die Monomeren a) bis c) werden vorzugsweise so gewählt, daß die Mindest-Filmbilde-Temperatur von A) unter 50°C, besonders bevorzugt unter 35°C liegt. Der LD-Wert der wäßrigen Dispersion von A) liegt vorzugsweise über 85, besonders bevorzugt über 90 %.

Die Teilchengröße der wäßrigen Dispersion wird gekennzeichnet durch den LD-Wert. Das ist die Lichtdurchlässigkeit einer auf 0,01 Gew.-% verdünnten Dispersion bei einer Schichtdicke von 2,5 cm und einer Wellenlänge des eingestrahlten Lichtes von 0,546 µm im Vergleich zu reinem Wasser.

Die Mindest-Filmbilde-Temperatur (MFT) gibt die niedrigste Temperatur an, bei der noch ein rißfreier Film gebildet wird. Sie wird auf einer Meßbank mit einem Temperaturgradienten bestimmt, wie in DIN 53 787 (1974) angegeben.

Die Copolymerisate A) können z.B. im wäßrigen Medium nach den bekannten Methoden der Emulsionspolymerisation hergestellt werden.

Als Emulgiermittel können alle für die Emulsionspolymerisation üblichen anionischen und/oder nichtionischen Emulgatoren verwendet werden. Bevorzugt werden eingesetzt Natrium-Laurylsulfat, Natrium-C₁₅-Paraffinsulfonat, Natrium-Dodecylbenzolsulfonat, Natriumsalze der Schwefelsäureester der Umsetzungsprodukte von Alkylphenolen mit Ethylenoxid und das Na-Salz von C₁₂-Alykl-Diphenyletherdisulfonat. Die Mengen liegen vorzugsweise zwischen 0,5 bis 3 % bezogen auf die Monomeren.

Als Initiatoren können die üblichen wasserlöslichen und radikal bildenden Verbindungen verwendet werden. Bevorzugt werden Alkalipersulfate und Wasserstoffperoxid allein oder in Kombination mit wasserlöslichen Reduktionsmitteln wie Ascorbinsäure, Natriumsulfit oder das Anlagerungsprodukt von Natriumsulfit an Formaldehyd. Werden Redox-Initiatorsysteme verwendet, ist die Gegenwart von Schwermetallsalzen z.B. Eisen-II-sulfat von Vorteil.

Die Polymerisationstemperatur kann z.B. zwischen 20 und 95°C variiert werden. Der bevorzugte Bereich liegt zwischen 50 und 85°C.

Die Polymerisation kann auch in Gegenwart von Reglern erfolgen. Übliche Regler sind Schwefelverbindungen wie Dodecylmercaptan oder Ester der Thioglykolsäure.

Der wasserlösliche, vorzugsweise wasserdispergierbare Polyester B) ist ein Kondensationsprodukt von Polyolen, vorzugsweise Diolen, und Polycarbonsäuren, vorzugsweise Dicarbonsäuren oder Gemischen von Dicarbonsäuren mit Tricarbonsäuren. Statt der Polycarbonsäuren können als Ausgangskomponenten für die Kondensation auch Ester oder Anhydride der Polycarbonsäuren eingesetzt werden.

Beispiele für die Polyole sind α,ω-aliphatische Glykole mit 2 bis 12 Kohlenstoffatomen z.B. Ethylenglykol, 1,3- oder 1,2-Propylenglykol, 2,4-Dimethyl-2-ethylhexan-1,3-diol, 2,2-Dimethyl-1,3-propandiol, 2-Ethyl-2-butyl-1,3-propandiol, 1,3- und 1,4-Butandiol, 1,5-Pentandiol, 1,6-Hexandiol, Neopentylglykol, cycloaliphatische Diole wie 1,2-, 1,3- und 1,4-Bis(hydroxymethyl)-cyclohexan, Dianhydrosorbit, Dianhydromannit, 4,4'-iso-Propyliden-bisphenol (Bisphenol A) und Polyethylenglykole der allgemeinen Formel H-(OCH₂-CH₂)ₙ-OH wie z.B. Diethylenglykol, Triethylenglykol, Tetraethylenglykol und höhere Polyalkylenglykole mit einem Polymerisationsgrad n bis zu 20 (Pluriol-Marken) und deren Mischungen.

Es können auch Polyole, insbesondere Diole mitverwendet werden, die zusätzlich eine Sulfonat- bzw. Carboxylgruppe enthalten wie z.B. Sulfonsäurederivate von Glycerin, wie sie in der Patentschrift FR 2 318 184 beschrieben sind. Der Anteil dieser Polyole kann z.B. 0 bis 30 Gew.-%, der Polyole insgesamt betragen.

Bevorzugt sind cycloaliphatische Glykole. Besonders bevorzugt sind Glykole mit 2 bis 6 Kohlenstoffatomen, Polyethylenglykole mit einem Polymersationsgrad von 5 bis 15 und 1,4-Bis(hydroxymethyl)cyclohexan und deren Mischungen.

Beispiele für Polycarbonsäuren, bzw. deren Anhydride oder Ester sind Terephthalsäure, Isophthalsäure, Phthalsäure, t-Butylisophthalsäure bzw. deren Methyl- oder Ethylester aber auch aliphatische α,ω-Dicarbonsäuren wie Bernsteinsäure, Adipinsäure, Sebazinsäure, Itaconsäure und deren Mischungen.

Vorzugsweise handelt es sich bei den Polycarbonsäuren um Dicarbonsäuren, welche keine weitere Säuregruppe enthalten, und 0 bis 65 Gew.-%, vorzugsweise 5 bis 50, besonders bevorzugt 5 bis 30 Gew.-%, bezogen auf die Polycarbonsäuren, um Dicarbonsäuren, welche zusätzlich eine Sulfonsäure- bzw. Sulfonatgruppe tragen oder um höherfunktionelle Polycarbonsäuren, insbesondere Tricarbonsäuren.

Als letztere zu nennen sind beispielsweise Sulfophthalsäure, Sulfotherephthalsäure, Sulfoisophthalsäure, 4-Sulfonaphthalen-2,7-dicarbonsäure oder Mellitsäure, Pyromellitsäure oder Trimellitsäureanhydrid und deren Mischungen.

Sulfonsäuregruppen liegen in den eingesetzten Polycarbonsäuren im allgemeinen in neutralisierter Form, d.h. als Sulfonatgruppe vor.

Bevorzugte Polycarbonsäuren sind Terephthalsäure, Isophthalsäure, das Na-Salz der Sulfoisophthalsäure, Trimellitsäureanhydrid und deren Mischungen.

Der Anteil der Polyole beträgt vorzugsweise 20 bis 60 Gew.-%, der der Polycarbonsäuren bzw. deren Anhydride oder Ester 40 bis 80 Gew.-%, bezogen jeweils auf die Aufbaukomponenten des Polyesters B).

Das molare Verhältnis der Carbonsäuregruppen der Polycarbonsäuren (wobei Anhydridgruppen oder Estergruppen entsprechend den Carbonsäuregruppen, von denen sie sich ableiten, einbezogen werden) zu den Hydroxylgruppen der Polyole beträgt vorzugsweise 1:0,7 bis 1:1,5, besonders bevorzugt ist das Verhältnis ca. 1:1.

Der Polyester B) hat vorzugsweise eine Mindestfilmbildetemperatur unter 50°C besonders bevorzugt unter 30°C eine Glasübergangstemperatur von 0 bis 100°C, besonders bevorzugt von 15 bis 60°C und eine Säurezahl von 0 bis 200, besonders bevorzugt von 0 bis 100. Der LD-Wert des Polyesters liegt vorzugsweise über 75 %.

Die Herstellung des Polyesters erfolgt vorzugsweise nach dem bekannten Verfahren der Schmelzkondensation. Die Einsatzstoffe werden in einem Reaktionsgefäß zusammengegeben und auf 200 bis 250°C erhitzt. Als Katalysator werden vorzugsweise metallorganische Verbindungen wie Alkylzinnsäuren oder Alkyltitanate, z.B. Triisopropyltitanat verwendet. Besonders bevorzugt ist Butylzinnsäure. Die Menge des Katalysators beträgt vorzugsweise 0,05 bis 5 Gew.-%, bezogen auf den Polyester.

Vorzugsweise werden zunächst Dicarbonsäuren mit den Diolen umgesetzt bis die gewünschte Säurezahl erreicht ist. Das entstehende Wasser wird vorzugsweise unter Vakuum abdestilliert. Dicarbonsäuren mit Sulfogruppen, z.B. Sulfoisophthalsäure oder Tricarbonsäuren bzw. deren Anhydride z.B. Trimellitsäureanhydrid werden vorzugsweise danach zugesetzt und die Reaktion weitergeführt bis die gewünschte Endsäurezahl erreicht ist.

In die heiße Schmelze kann dann zur Herstellung der Dispersion Wasser eingerührt oder die Schmelze in Wasser ausgetragen werden. Bei Bedarf werden die Säuregruppen dann z.B. mit Aminen, Ammoniak oder Alkalihydroxyiden neutralisiert.

Die wäßrigen Dispersionen, bzw. Lösungen des Copolymerisats A) und des Polyesters B) können gemischt werden, um so eine wäßrige Lösung, vorzugsweise Dispersion zu erhalten, welche das Copolymerisat A) und den Polyester B) enthält.

Vorzugsweise beträgt der Anteil des Copolymerisats A) 30 bis 95 Gew.-%, besonders bevorzugt 50 bis 90 Gew.-% mit des Polyesters B) 5 bis 70 Gew.-% besonders bevorzugt 10 bis 50 Gew.-%, bezogen jeweils auf die Summe von A) + B).

Der Polymergehalt (Summe A) + B)) der wäßrigen Lösung oder Dispersion beträgt vorzugsweise 5 bis 35, besonders bevorzugt 15 bis 30 Gew.-%, bezogen auf die Lösung bzw. Dispersion, bezogen auf die wäßrige Dispersion bzw. Lösung. Die wäßrige Lösung oder Dispersion ist vorzugsweise im wesentlichen frei von organischen Lösungsmitteln.

Beim erfindungsgemäßen Verfahren werden zur Verpackung geeignete Substrate mit der wäßrigen Lösung oder Dispersion des Copolymerisats A) und Polyester B) (im folgenden kurz Polymerdispersion genannt) beschichtet. Geeignete Substrate sind insbesondere Folien, z.B. aus Kunststoff, Metall oder Papier.

Die Polymerdispersion kann direkt zur Beschichtung eingesetzt werden. Die Anwendung kann beispielsweise auf Beschichtungsmaschinen in der Weise vorgenommen werden, daß man auf eine Trägerfolie aus einem Kunststoff, einem Metall oder Papier die Polymerdispersion aufträgt. Sofern bahnförmige Materialien als Trägerfolie verwendet werden, wird die Polymerdispersion üblicherweise aus einer Wanne über eine Auftragswalze aufgetragen und mit Hilfe einer Luftbürste egalisiert. Eine andere Möglichkeit, die Beschichtung auf die Trägerfolie aufzubringen, gelingt mit Hilfe des Reverse Gravure-Verfahrens. Um die Haftung auf der Folie noch zu verbessern, kann die Trägerfolie zuvor einer Corona-Behandlung unterworfen werden. Die auf die flächigen Materialien aufgetragenen Mengen an Polymerdispersion betragen z.B. vorzugsweise 1 bis 10 g (Polymer, fest) m², vorzugsweise 2 bis 7 g/m² bei Folien (bzw. 10 bis 30 g/m² bei Papier). Nach dem Aufbringen der Polymerdispersion auf die flächigen Substrate wird das Wasser verdampft. Hierfür kann man beispielsweise bei kontinuierlichem Arbeiten die Trägerfolie durch einen Trocknerkanal führen, der mit einer Infrarot-Bestrahlungsvorrichtung ausgestattet sein kann. Danach wird die beschichtete und getrocknete Folie über eine Abkühlwalze geführt und schließlich aufgewickelt. Die Dicke der getrockneten Beschichtung beträgt vorzugsweise 1 bis 50 µm, besonders bevorzugt 2 bis 20 µm.

Die mit der Polymerdispersion beschichteten Substrate zeigen eine hervorragende Barrierewirkung gegen Sauerstoff, auch unter Einwirkung von Feuchtigkeit. Die beschichteten Substrate können als solche als Verpackungsmittel verwendet werden. Die Beschichtungen haben sehr gute mechanische Eigenschaften, und zeigen z.B. Glanz, Transparenz und gutes Blockverhalten und zeigen im wesentlichen keine Rißbildungen.

Um spezielle Oberflächen- oder Beschichtungseigenschaften der Verpackungsmittel, zu erhalten, beispielsweise eine gute Bedruckbarkeit, noch besseres Siegel- und Blockverhalten, gute Wasserbeständigkeit, kann es vorteilhaft sein, die mit der Sauerstoffbarriere beschichteten Substrate mit Deckschichten überzubeschichten, die diese gewünschten Eigenschaften zusätzlich verleihen. Die mit der Sauerstoffbarriere vorbeschichtete Substrat zeigt eine gute Überbeschichtbarkeit. Es kann erneut nach einem oben angeführten Verfahren überbeschichtet oder in einem kontinuierlichen Prozeß ohne zwischenzeitliches Auf- und Abwickeln z.B. der Folie mehrfach beschichtet werden. Die Sauerstoffsperrschicht befindet sich dadurch im Inneren des Systems, die Oberflächeneigenschaften werden dann von der Deckschicht bestimmt. Die Deckschicht hat eine gute Haftung zur Sauerstoffbarriereschicht.

Nach dem beschriebenen Verfahren lassen sich in einfacher Weise sauerstoffundurchlässige Beschichtungen, z.B. auf Folien aus orientiertem Polypropylen oder Polyethylen, herstellen, wobei das Polyethylen sowohl nach dem Hochdruck als auch nach dem Niederdruck Polymerisationsverfahren von Ethylen hergestellt worden sein kann. Andere geeignete Trägerfolien sind beispielsweise Folien aus Polyester, wie Polyethylenterephthalat, Folien aus Polyamid, Polystyrol und Polyvinylchlorid. Als Trägerfolien eignen sich außerdem Papiere und Metallfolien wie Aluminiumfolie. Die Dicke der Trägerfolien liegt im allgemeinen in dem Bereich von 10 bis 200 µm, bei Folien aus Polyamid bei 30 bis 50 µm, bei Folien aus Polyethylenterephthalat bei 10 bis 40 µm, bei Folien aus Polyvinylchlorid bei ca. 200 µm und bei Folien aus Polystyrol bei etwa 20 µm.

### Anwendungstechnische Prüfungen für Folienbeschichtungen mit Sauerstoffsperreigensachaften

1. Sauerstoff-Permeabilität
   Die Sauerstoff-Permeabilität wurde an Beschichtungen auf einer orientierten Polypropylenfolie bei 0 % und 50 % relativer Feuchte bestimmt. Dabei wird zunächst die Sauerstoffdurchlässigkeit gemessen, die anschließend auf eine Schichtdicke von 100 µm umgerechnet wird und als Sauerstoff-Permeabilität mit der Dimension cm³/m²·d·bar angegeben, wobei d die Zeit in Tagen ist. Die Bestimmung erfolgt in Anlehnung an ASTM-D 3985-81.
2. Beschichtungsblld
   Die Beschichtungsgüte wird visuell beurteilt. Stippige Beschichtungen oder solche mit vielen Netzfehlern können für weitere Untersuchungen nicht herangezogen werden. Die verwertbaren Beschichtungen müssen klar, transparent und weitestgehend blockfrei sein.
3. Wasserverträglichkeit
   Die Beschichtungen werden mit einem Tropfen Wasser versetzt und auf Weißanlaufen und Klebrigkeit beurteilt. Bei guter Wasserverträglichkeit wird die Beschichtung weder trüb noch klebrig.
4. Haftung auf der Folie
   Ein handelsüblicher Klebstreifen wird auf die Beschichtung geklebt, festgedrückt und ruckartig abgerissen. Wenn sich dadurch die Beschichtung von der Folie abgelöst hat und am Klebstreifen haftet, wird die Folienhaftung als schlecht beurteilt. Die Haftung wird als gut beurteilt, wenn sich der Klebstreifen ablöst ohne die Beschichtung zu beschädigen.
5. Überbeschichtbarkeit
   Die Überbeschichtbarkeit wird visuell beurteilt. Sie ist schlecht, wenn sich der Grundstrich beim Überbeschichten mit dem Deckstrich wieder ablöst oder anlöst oder wenn es zu Unverträglichkeiten mit dem Deckstrich kommt.
6. Siegelbarkeit
   Die beschichteten Proben werden Schicht gegen Schicht 0,25 sec. lang mit 2,5 bar Anpreßdruck bei 100, 110, 120 und 130°C gesiegelt. Die Siegelbacken haben das Format 150 x 10 mm, der resultierende Druck beträgt 0,25 N/mm².
   Die versiegelte Probe wird in (üblicherweise 7) Einzelprüflinge geschnitten, wobei jeder 15 mm breit ist. Die Siegelnahtfestigkeit (SNF) wird mit einer Computerreißmaschine bei einer Reißgeschwindigkeit von 150 mm/min gemessen. Das Bruchbild wird zusätzlich noch visuell beurteilt: KS = keine Siegelung, NA = Nahtauftrennung, TV = Teilversiegelung, VV = Vollversiegelung und FA/PA = Folien-Papierausriß.
7. Blockverhalten
   Das Blockverhalten wird dann als ausreichend beurteilt, wenn die mit dem Eigengewicht aufeinanderliegenden Folien (beschichtete Seite/beschichtete Seite) nicht aneinanderhaften. Ein sehr schlechtes Blockverhalten, das zur Unbrauchbarkeit führt, liegt dann vor, wenn die aufgewickelte Folie (beschichtete Seite/Rückseite) nur noch unter Beschädigung der Beschichtung abgewickelt werden kann.

### Herstellung der wäßrigen Dispersion A

### Copolymerisat A1

In ein Polymerisationsgefäß wurden 324,6 g Wasser und 10 g Natriumperoxidisulfat vorgelegt und auf die Polymerisationstemperatur von 75°C erwärmt. Anschließend wurden bei der Polymerisationstemperatur in das Reaktionsgefäß die Zuläufe I und II zugegeben.

Zulauf I wurde im Verlauf von 2 Stunden eingebracht. Nach 1,5 Stunden wurde mit Zulauf II begonnen, der ebenfalls im Verlauf von 2 Stunden zugegeben wurde.

Nach weiteren 3 Stunden wurde auf Raumtemperatur abgekühlt.
- Zulauf I:: 658,0 g Wasser
11,1 g einer 45 %igen wäßrigen Lösung des Natriumsalzes der C₁₂-Alkyl-Diphenyletherdisulfonsäure
125,0 g Acrylnitril (50 Gew.-%)
100,0 g Acrylsäure (40 Gew.-%)
25,0 g 2-Acrylamido-2-methylpropansulfonsäure (10 Gew.-%)
- Zulauf II:: 25,0 g Wasser
2,5 g Natriumperoxidisulfat.

Der Feststoffgehalt der resultierenden wäßrigen Polymerdispersion A1 betrug 20,2 %. Ihr pH-Wert lag bei 1,2 und der LD-Wert betrug 98 %. Die Mindest-Filmbilde-Temperatur war <5°C.

### Copolymerisat A2

Es wurde verfahren wie im Beispiel A1 angegeben, nur enthielt die Vorlage jetzt 475 g Wasser und 14,8 g Natriumperoxidisulfat und die Zuläufe hatten folgende Zusammensetzung:
- Zulauf I:: 950,0 g Wasser
16,4 g einer 45 %igen wäßrigen Lösung des Natriumsalzes der C₁₂-Alkyl-Diphenyletherdisulfonsäure
148,0 g Acrylnitril (40 Gew.-%)
111,0 g Acrylsäure (30 Gew.-%)
111,0 g 2-Sulfoethyl-methacrylat (30 Gew.-%)
- Zulauf II:: 100,0 g Wasser
3,7 g Natriumperoxidisulfat.

Der Feststoffgehalt der resultierenden wäßrigen Polymerlösung A2 betrug 20,5 %. Ihr pH-Wert lag bei 1,0 und der LD-Wert betrug 100 %. Die Mindest-Filmbilde-Temperatur war <4°C.

### Herstellung des wasserdispergierbaren Polyesters B

### Polyester B1

In ein trockenes Reaktionsgefäß wurden 68,9 g (0,65 Mol) Diethylenglykol und 50,5 g (0,35 Mol) 1,4-Bis(hydroxymethyl)cyclohexan vorgelegt und auf 80°C erwärmt.

Bei dieser Temperatur gab man 121,2 g (0,73 Mol) Isophthalsäure und 21,6 g (0,13 Mol) Terephthalsäure zu und erwärmte weiter auf 135°C. Hierzu wurden noch 0,3 g (0,1 %) Butylzinnsäure als Katalysator zugesetzt. Es wurde nun im Verlauf von 4 Stunden auf 230°C erwärmt, wobei Wasser abdestilliert. Die Reaktionstemperatur wurde weitere 4 Stunden bei 230 bis 235°C gehalten, bis der entstehende Polyester eine Säurezahl von 1,5 bis 3 mg KOH/g erreicht hat. Dabei sank der Druck bis zu einem Endwert von 1 bis 5 mbar. Bei dieser Säurezahl wurde auf 200°C abgekühlt und 28,8 g (0,15 Mol) Trimellitsäureanhydrid zugefügt. Die Reaktionsmischung wurde nun solange bei 200 bis 205°C gerührt, bis sie eine Säurezahl von 50 mg KOH/g aufwies. In die heiße Schmelze wurde sehr langsam ein Gemisch von 600 g Wasser, 10,4 g (0,11 Mol) Triethanolamin und 9,1 g (0,134 Mol) Ammoniak (25 %ig) eingerührt. Die Temperatur fiel ab und wurde bei 90°C gehalten. Man rührte weitere 4 Stunden bei 90°C und kühlte dann auf Raumtemperatur ab.

Die Polyesterdispersion B1 hatte einen Feststoffgehalt von 30 %. Ihr pH-Wert lag bei 6,8 und der LD-Wert betrug 82 %. Die Mindest-Filmbilde-Temperatur von kleiner als 5°C. Die Glasübergangstemperatur betrug 36°C. Die Säurezahl betrug 50 mg KOH/g.

### Polyester B2

Man arbeitete wie im Beispiel B1 angegeben, nur verwendete man hier folgende Ausgangssubstanzen: 90 g (1,44 Mol) Ethylenglykol, 76 g (0,72 Mol) Diethylenglykol, 54 g (0,36 Mol) Triethylenglykol, 176 g (1,06 Mol) Isophthalsäure, 130 g (0,78 Mol) Terephthalsäure und 75 g (0,28 Mol) Sulfoisophthalsäure (Na-Salz). Als Katalysator wurde 1 g Butylzinnsäure verwendet.

Der wasserdispergierbare Polyester B2 hatte einen Feststoffgehalt von 25 %. Sein pH-Wert lag bei 3 bis 7 und LD-Wert betrug ca. 100 %. Die Mindest-Filmbilde-Temperatur war kleiner als 5°C. Die Glasübergangstemperatur betrug 28°C. Die Säurezahl betrug 0 bis 20 mg KOH/g.

### Beispiel für eine Beschichtung

Zunächst wurde auf einer Versuchsanlage (Fa. Dixon Nr. 160) eine orientierte Polypropylen (PP)-Folie (Fa. Mobil, Qualität MB 200, ca. 20 µ dick, elektrisch vorbehandelt (Corona, 0,4 A, 30 m/min). Im zweiten Schritt wurde zur Verbesserung der Haftung die coronabehandelte Folie mit der auf 5 % Feststoffanteil verdünnten Lösung (Methylethylketon, Toluol) eines 2-Komponenten-Polyurethan-Primers (Adcote 376 A, Fa. Morton Int.) beschichtet. Das Auftragssystem ist Luftbürste, über den angelegten Luftdruck wurde die Auftragsmenge auf 0,5 g/qm eingestellt. Die Beschichtungsgeschwindigkeit betrug 30 m/min, der Trockenkanal war ca. 4 m lang und wurde auf 105°C geheizt. Die Folie wird nach passieren des Trockners erneut aufgewickelt.

Im dritten Schritt wurden Polymerdispersionen, (18 gew.-%ige) entsprechend aufgetragen, das Auftragsgewicht wurde auf 3 bis 4 g/qm eingestellt, die Trocknungstemperatur betrug 120°C. Eine IR-Vortrocknung war zugeschaltet. Die so beschichtete Folie wurde wieder aufgewickelt.

Prüfergebnisse an der Folie sind in Tabelle 1 aufgeführt.

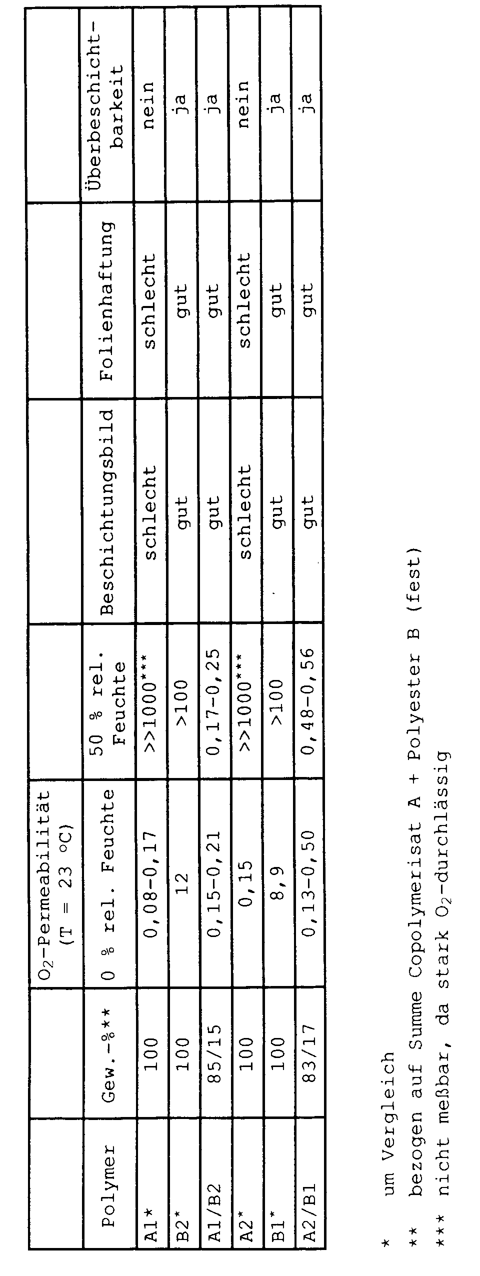

Zur weiteren Verbesserung der Gebrauchseigenschaften wurde die mit der Dispersion A1/B2 beschichtete Folie mit einer Überbeschichtung versehen. Für eine bessere Haftung der Deckbeschichtung mit der Barriereschicht wurde Zuvor ein Haftvermittler nach dem oben beschriebenen Verfahren aufgetragen und getrocknet (verwendet wurde die wäßrige Dispersion Acronal® DS 2296X, auf 40 %ig Festgehalt verdünnt, Auftragsgewicht 2,5 g/qm, getrocknet bei 120°C) . Im letzten Schritt wurde mit der Dispersion beschichtet, die dem Film die gewünschten Oberflächeneigenschaften verleiht, z.B. Siegelbarkeit, Blockfestigkeit, Wasser- und Ölbeständigkeit. In diesem Beispiel war die Deckschicht Acronal DS 2316X (45 %ige Dispersion, Auftrag 2 g/qm) . Die Beurteilung findet man in Tabelle 2.

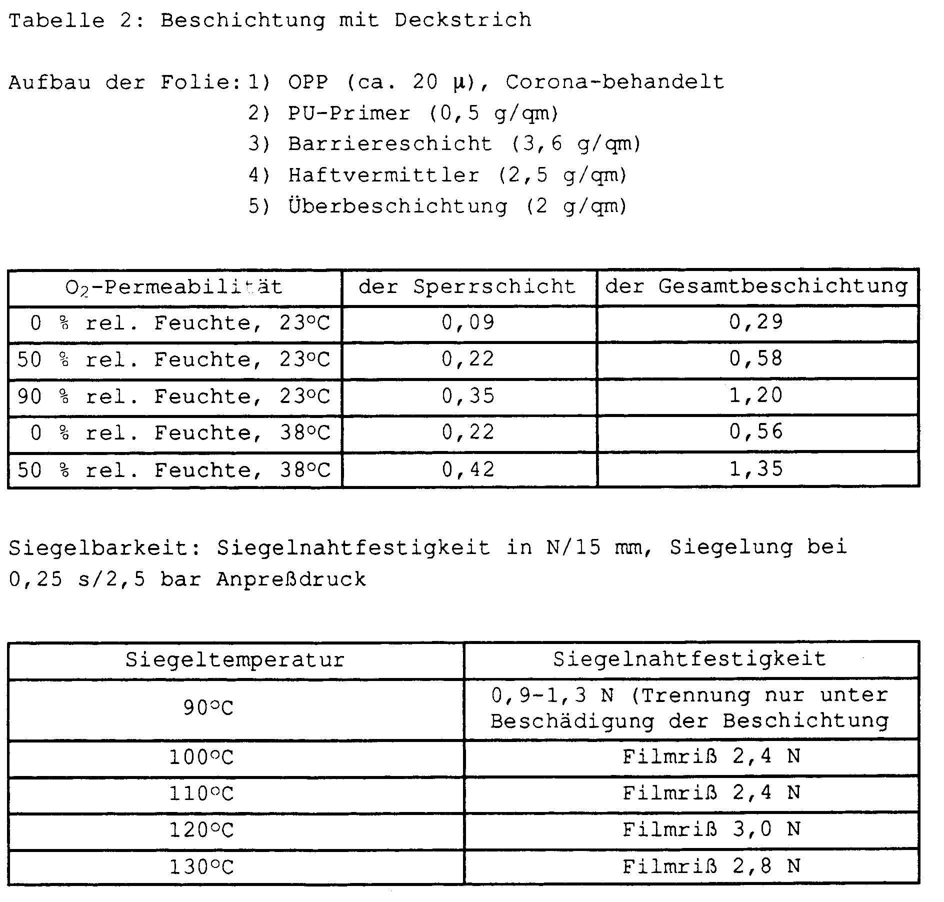

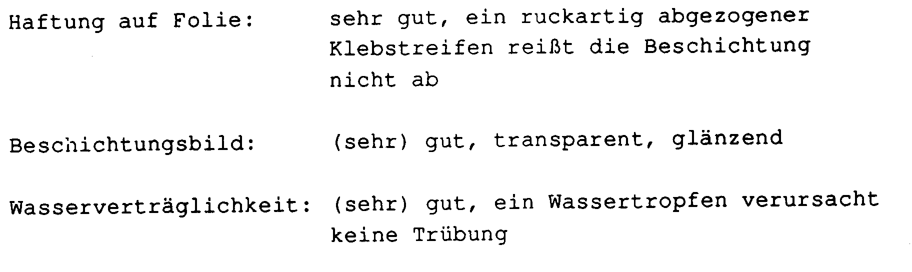

## Patentansprüche

1. Verfahren zur Herstellung von Verpackungsmitteln, dadurch gekennzeichnet, daß zur Verpackung geeignete Substrate mit einer wäßrigen Lösung oder Dispersion, welche ein Copolymerisat A), aufgebaut aus
a) 10 bis 100 Gew.-% einer ethylenisch ungesättigten C₃-C₅-Carbonsäure oder -Dicarbonsäure, Anhydriden oder Halbestern der Dicarbonsäuren
b) 0 bis 50 Gew.-% einer ethylenisch ungesättigten Verbindung mit mindestens einer Sulfonsäure- oder Sulfonatgruppe
c) 0 bis 70 Gew.-% weiteren Monomeren,
und einen Polyester B) enthält, beschichtet werden und gegebenenfalls danach noch weitere Deckbeschichtungen aufgebracht werden.

2. Verfahren gemäß Anspruch 1, dadurch gekennzeichnet, daß die Mindestfilmbildtemperatur des Copolymerisats A) und des Polyesters B) unter 50°C liegt.

3. Verfahren gemäß Anspruch 1 oder 2, dadurch gekennzeichnet, daß die wäßrige Dispersion oder Lösung 30 bis 95 Gew.-% des Copolymerisats A) und 70 bis 5 Gew.-% des Polyesters B), bezogen auf die Summe aus A) + B) enthält.

4. Verfahren gemäß einem der Ansprüche 1 bis 3, dadurch gekennzeichnet, daß Copolymerisat A) aus 10 bis 50 Gew.-% der Monomeren a), 10 bis 40 Gew.-% der Monomeren b) und 30 bis 60 Gew.-% der Monomeren c) aufgebaut ist.

5. Verfahren gemäß einem der Ansprüche 1 bis 4, dadurch gekennzeichnet, daß es sich bei dem Polyester B) um einen im wesentlichen linear aufgebauten Polyester mit Sulfonsäure bzw. Sulfonat- oder Carboxyl- bzw. Carboxylatgruppen und einer Säurezahl von 0 bis 200 mg KOH/g Polyester handelt.

6. Verfahren gemäß einem der Ansprüche 1 bis 5, dadurch gekennzeichnet, daß es sich bei den zur Verpackung geeigneten Substraten um Kunststoffolien, Metallfolien oder Papier handelt.

7. Verfahren gemäß einem der Ansprüche 1 bis 6, dadurch gekennzeichnet, daß die Beschichtung nach Trocknung eine Schichtdicke von 1 bis 50 µm aufweist.

8. Verfahren gemäß einem der Ansprüche 1 bis 7, dadurch gekennzeichnet, daß auf die erhaltene Beschichtung mindestens eine weitere Deckschicht aufgetragen wird.

9. Verwendung von beschichteten Substraten, wie sie durch ein Verfahren gemäß einem der Ansprüche 1 bis 8 erhältlich sind, als Verpackungsmittel.

## Claims

1. A process for the preparation of packaging materials, which comprises coating substrates suitable for packaging with an aqueous solution or emulsion which contains a copolymer A) composed of
a) from 10 to 100 % by weight of an ethylenically unsaturated C₃-C₅-carboxylic acid or C₃-C₅-dicarboxylic acid or anhydrides or half-esters of the dicarboxylic acids,
b) from 0 to 50 % by weight of an ethylenically unsaturated compound having at least one sulfo or sulfonate group and
c) from 0 to 70 % by weight of further monomers
and a polyester B) and, if required, then applying further top coats.

2. A process as claimed in claim 1, wherein the minimum film formation temperature of the copolymer A) and of the polyester B) is less than 50°C.

3. A process as claimed in claim 1 or 2, wherein the aqueous emulsion or solution contains from 30 to 95 % by weight of the copolymer A) and from 70 to 5 % by weight of the polyester B), based on the sum of A) + B).

4. A process as claimed in any of claims 1 to 3, wherein co-polymer A) is composed of from 10 to 50 % by weight of the monomers a), from 10 to 40 % by weight of the monomers b) and from 30 to 60 % by weight of the monomers c).

5. A process as claimed in any of claims 1 to 4, wherein the polyester B) is an essentially linear polyester having sulfo or sulfonate or carboxyl or carboxylate groups and an acid number of from 0 to 200 mg KOH/g of polyester.

6. A process as claimed in any of claims 1 to 5, wherein the substrates suitable for packaging are plastics films, metal foils or paper.

7. A process as claimed in any of claims 1 to 6, wherein the coating has a thickness of from 1 to 50 µm after drying.

8. A process as claimed in any of claims 1 to 7, wherein at least one further top coat is applied to the coating obtained.

9. Use of a coated substrate obtainable by a process as claimed in any of claims 1 to 8 as packaging material.

## Revendications

1. Procédé de préparation de matériaux d'emballage, caractérisé en ce que l'on revêt des substrats aptes à l'emballage, avec une solution ou une dispersion aqueuse qui contient un copolymère A), construit à partir de
a) 10-100% en poids d'un acide carboxylique ou dicarboxylique à insaturation éthylénique en C₃-C₅, des anhydrides ou des hémiesters des acides dicarboxyliques,
b) 0-50% en poids d'un composé à insaturation éthylénique avec au moins un groupement acide sulfonique ou sulfonate,
c) 0-70% en poids d'autres monomères,
et un polyester B), et on dépose éventuellement ensuite d'autres revêtements de couverture.

2. Procédé selon la revendication 1, caractérisé en ce que la température minimale de formation de film du copolymère A) et du polyester B) se situe sous 50°C.

3. Procédé selon la revendication 1 ou 2, caractérisé en ce que la solution ou dispersion aqueuse contient 30-95% en poids du copolymère A) et 70-5% en poids du polyester B), par rapport à la somme A) + B).

4. Procédé selon l'une quelconque des revendications 1 à 3, caractérisé en ce que le copolymère A) est construit à partir de 10-50% en poids des monomères a), 10-40% en poids des monomères b) et 30-60% en poids des monomères c).

5. Procédé selon l'une quelconque des revendications 1 à 4, caractérisé en ce que le polyester B) est un polyester essentiellement linéaire avec des groupements acide sulfonique ou sulfonate ou carboxy ou carboxylate et un indice d'acide de 0-200 mg de KOH/g de polyester.

6. Procédé selon l'une quelconque des revendications 1 à 5, caractérisé en ce que les substrats aptes à l'emballage sont des feuilles de matières plastiques, des feuilles de métal ou du papier.

7. Procédé selon l'une quelconque des revendications 1 à 6, caractérisé en ce que le revêtement présente une épaisseur après séchage de 1-50 µm

8. Procédé selon l'une quelconque des revendications 1 à 7, caractérisé en ce que l'on dépose au moins une couche de couverture sur le revêtement obtenu.

9. Utilisation de substrats enduits obtenus par un procédé selon l'une quelconque des revendications 1 à 8, comme matériaux d'emballage.
